# EUROPEAN PATENT APPLICATION

(11) **EP 4 640 610 A1**
(43) Date of publication of application: **29.10.2025**
(21) Application number: 22969079.7
(22) Date of filing: 20.12.2022
(51) Int. Cl.: B66C 1/10, F03D 13/10, F03D 13/20

(54) **GUIDING SYSTEM FOR EXCHANGING A WIND TURBINE BLADE AND USE METHOD**

(71) Applicant: Nabrawind Technologies, S.L., 31002 Pamplona (ES)
(72) Inventor: SANZ PASCUAL, Eneko, 31002 Pamplona (ES); AROCENA DE LA RÚA, Ion, 31001 Pamplona (ES); IRIARTE ELETA, Javier, 31180 Zizur Mayor (ES); MAYOR MORENO, Luis Alberto, 28026 Madrid (ES); MARTÍ GASTALDO, Juan José, 28017 Madrid (ES)
(86) International application number: PCT/ES2022/070815
(87) International publication number: WO 2024/133978

(57) **Abstract**

The invention relates to a guiding system for exchanging a wind turbine blade (4), which uses an internal lifting and lowering system fixed to a rotor (3). The guiding system is characterised in that it comprises semi-rigid passive retaining lines (5) that form a safe catenary or track for lowering the blades (4) without same hitting the tower (1) or the ground as a result f incident winds of up to 15 m/s. A clip (7) fastened to the end part of the Blade (4) slides along the retaining lines (5) with the horizontal movement of the Blade (4). The catenary may optionally have intermediate points, and the tension thereof is dependent on the incident wind: the greater the wind, the greater tension. The guiding system can be used for onshore wind turbines, floating offshore wind turbines connected to a spring, and boat-assisted offshore wind turbines on the high seas.

## Description

### Field of invention

The present blade guiding system during lifting and lowering manoeuvres uses passive retaining lines and a hoisting clip attached to the blade tip. It also describes the method of use for onshore and offshore wind turbines: both fixed and floating, as well as those using an assisting boat or assembled in port.

### Background

This guiding system is independent of the lifting and lowering system covered by PCT/ES2021070488 of the same applicant.

During the assembly, replacement, or repair of blades, whether with or without the use of large cranes, retaining lines are necessary to ensure that the blade does not hit the tower due to the action of the wind. They are also used to rotate the blade from a vertical to a horizontal position and vice versa.

The most common retaining elements are flexible elements complemented by small cranes that are attached to the blade tip and guide it when it is close to the ground, helping it to change its position. Patents US20100139062A1 and US2015233341A1 show how the blade tip is guided with the help of a crane. Patent US20160040649A1 details how the small retention crane incorporates a basket to insert and support the blade tip.

Also, it is well-known how to control blade tip movements due to the incident wind, counteracting them with several cables guided and held manually through their corresponding winches or pulleys. Such is the case with patent US2017045030A1. Patents WO2018054440A1, WO2011086205A1, and WO2006053554A2 also show blade tips with cables and ropes attached to hoists placed on the ground, for the purpose of retaining the tip and rotating the blade.

In some of the above-mentioned patents, the retaining lines are the same as those that lower the blade, and in other cases, the retaining lines applied to the blade tips are active systems: cables that move, roll up, and/or roll out, independent of those used to raise and lower the blade.

None of the prior-art patents present the solution for retaining lines to be semi-rigid, motionless cables that serve as a guide for the blade and achieve blade control/rotation in very high winds.

### Description

The guiding system consists of cables that simulate metal guides or fixed rails. It is a passive and semi-rigid system, meaning it has a certain degree of flexibility.

One object of the invention is that the two stay cables form a catenary that is as fixed as possible and are separated from each other by a distance that remains constant from their anchorage in the nacelle to their anchorage in the ground. This distance is equal to the width of the clip used and wider than the blade itself.

Another object of the invention is that the retaining lines are independent of the lifting/lowering system.

Another object of the invention is that the clip that connects to the blade tip rises and engages the blade, remaining attached to it in the first third of the blade, allowing the blade to rotate freely according to the catenary.

Another object of the invention is that the tool that tensions the cable and forms the change of direction that forms the catenary (which prevents the blade tip from hitting the ground and varies depending on the blade's length) is a counterweight that is anchored to the ground or consists of metal guides that are anchored to the foundation. The retaining lines are kept constantly taut by the action of internal tensioners. The stronger the wind, the greater the tension.

The blade must also be positioned horizontally. It will first lower with the retaining lines at a 30° angle and then at a 90° angle. Typically, this is done with a crane, but if a crane is not required, a second practical option can be used.

The advantages of this system are that it can be assembled with incident wind speeds of 15 m/s, compared to conventional crane assembly, which only allows wind speeds of 8 to 10 m/s.

Finally, another objective is to detail the differences in the use of retaining lines depending on whether the wind turbines are onshore or offshore.

### Brief description of the drawings

A brief description will be given below for a series of drawings useful for better understanding the invention and that expressly relate to the embodiments of said invention, being presented as a non-limiting example.
Figure 1 shows the complete wind turbine.
Figure 2 shows the cable deployment from the nacelle.
Figure 3 shows the counterweight pad for anchoring the cables.
Figure 4 shows the connecting clip and its lifting.
Figure 5 shows the clip being anchored to the blade.
Figure 6 shows the lowering manoeuvre.
Figure 7 shows the auxiliary crane.
Figure 8 shows the levelling process.
Figures 9 to 16 show the cable deployment, anchoring and tensioning, raising and anchoring to the blade with the connecting clip, and lowering the blade, according to a second embodiment of the invention.
Figure 17 shows the system on a fixed offshore wind turbine assisted by an auxiliary vessel.
Figure 18 shows the proposed system for a floating offshore wind turbine located next to a dock.

### Detailed description

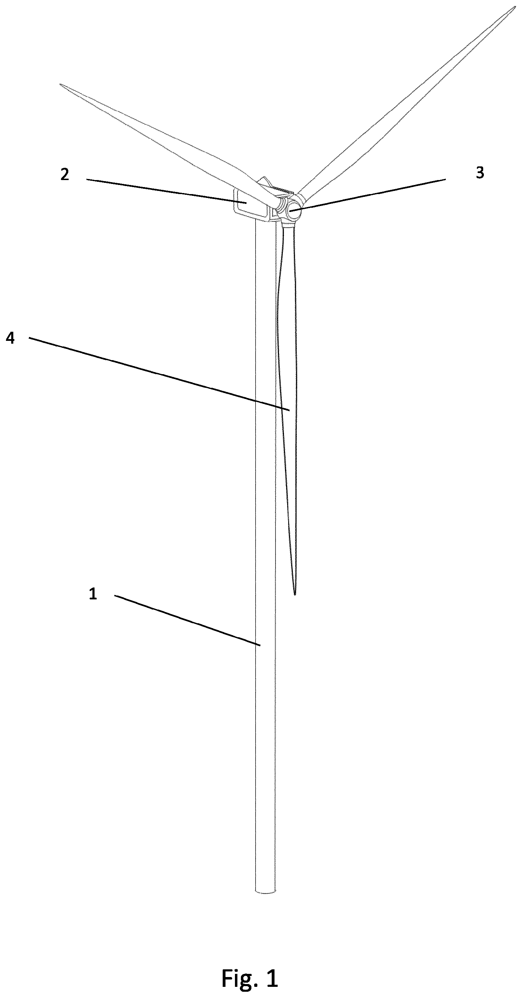

As shown in Figure 1, the wind turbine consists of a tower (1) anchored to the ground, which supports its corresponding rectangular nacelle (2), crowned at the front by a rotor (3) that typically supports three blades (4). The blade to be lowered is arranged vertically, parallel to the tower (1).

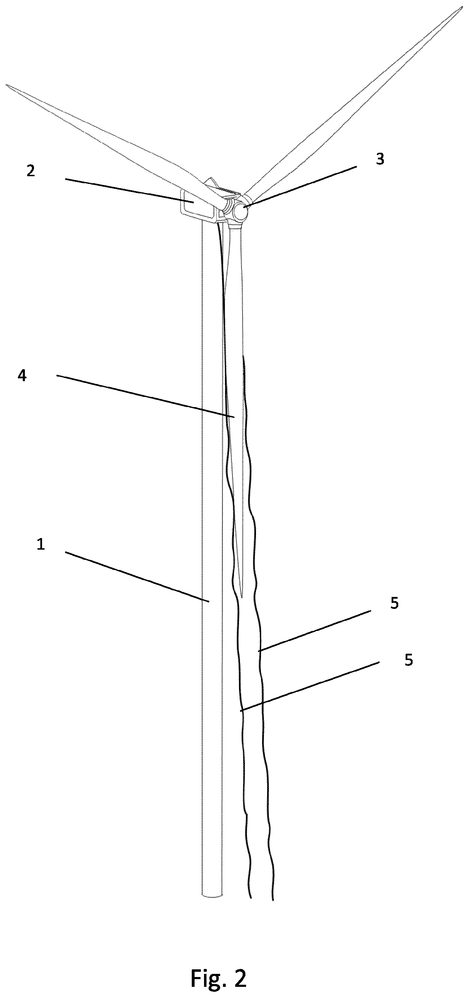

Figure 2 shows how the retaining lines (5) extend from the lower front of the nacelle (2) to the base of the tower (1). These retaining lines (5) are two in number and are preferably steel cables.

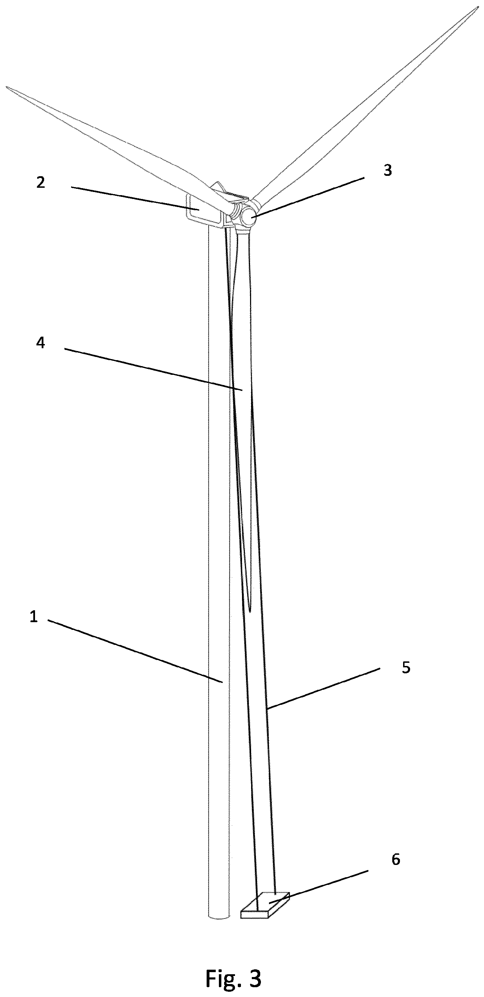

Figure 3 shows the counterweight (6) anchored to the ground, separated from the tower (1) by a sufficient distance to establish a catenary or safe path that prevents the blade (4) from hitting the tower (1) due to the incident wind. The retaining lines (5) are fixed to the counterweight and are tensioned more or less depending on the wind speed. Instead of counterweights, beams connected to the foundation (not shown in the drawing) can be used to keep the guy lines at a sufficient distance from the tower.

The tensioners can be placed on the counterweight (6), on the beams (not shown), or on the nacelle (2) itself.

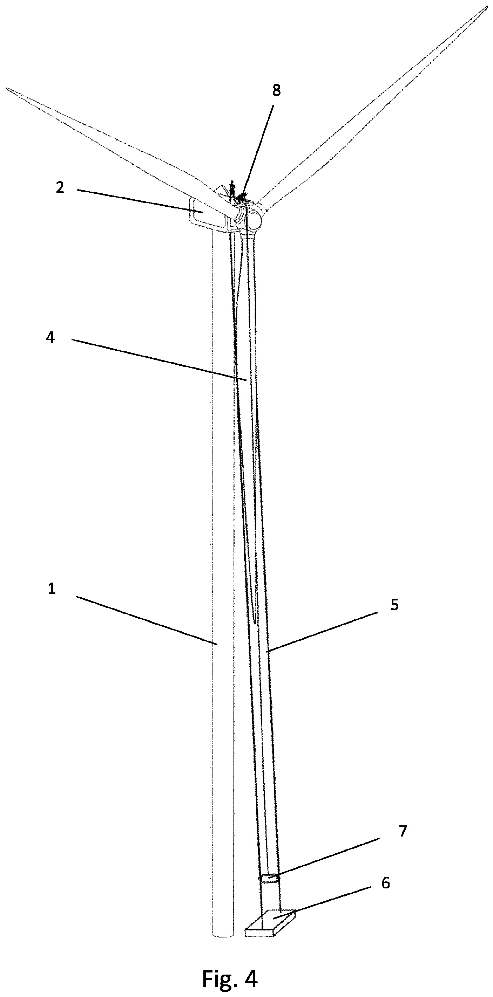

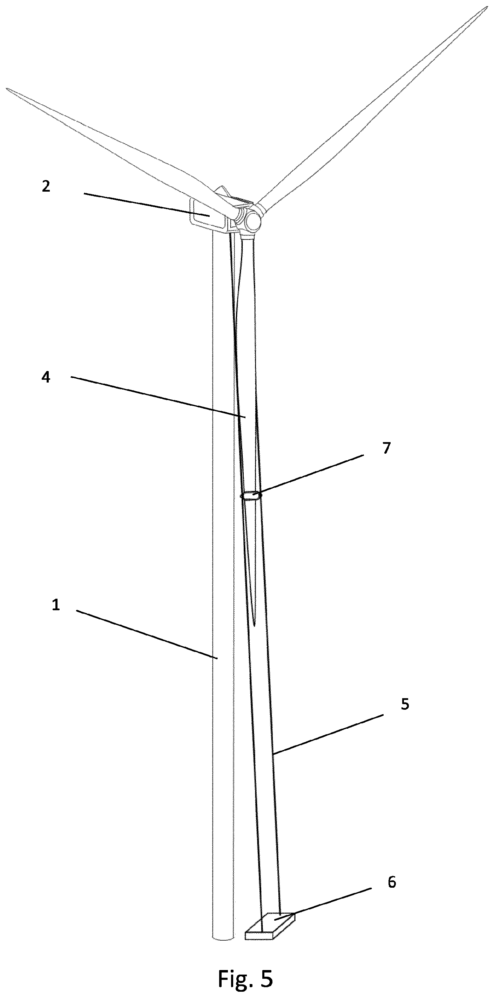

Figure 4 shows the lifting of the clip (7) along the track formed by the retaining lines (5). This lifting is carried out from the top of the nacelle (2) by workers (8) pulling a rope or similar device. When the clip (7) reaches the lower part of the blade (4), it is secured there, and the lifting means are removed, as shown in Figure 5.

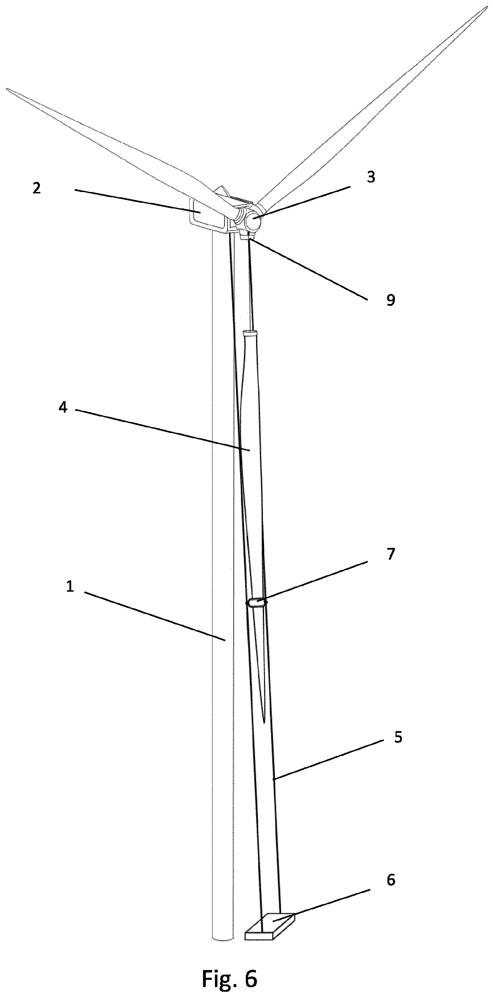

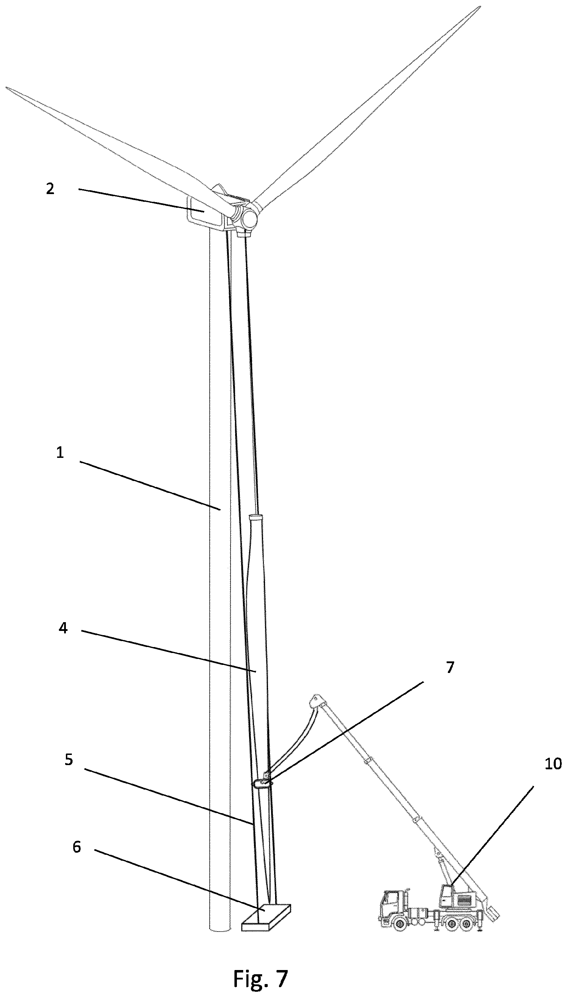

As shown in Figure 6, the crane-free lifting and lowering device (9) presented in patent PCT/ES2021070488, which is anchored inside the hub (3), consists of an alignment device with hoists, cables, and pulleys, and a lowering device with a drumless hoist, cable, and pulley set. This device is completely independent of the guiding system object of the invention. As the lowering device lowers the blade, the clip slides along the safe path formed by the retainers (5), preventing the incident wind from causing it to move outside the plane formed by the retainers (5). When the blade tip (4) reaches the ground, the clip (7) is attached to an auxiliary element (10) such as a crane or similar. At that moment, the lateral anchors of the clip (7) are released, allowing it to slide along the path of the retainers (5), as shown in Figure 7.

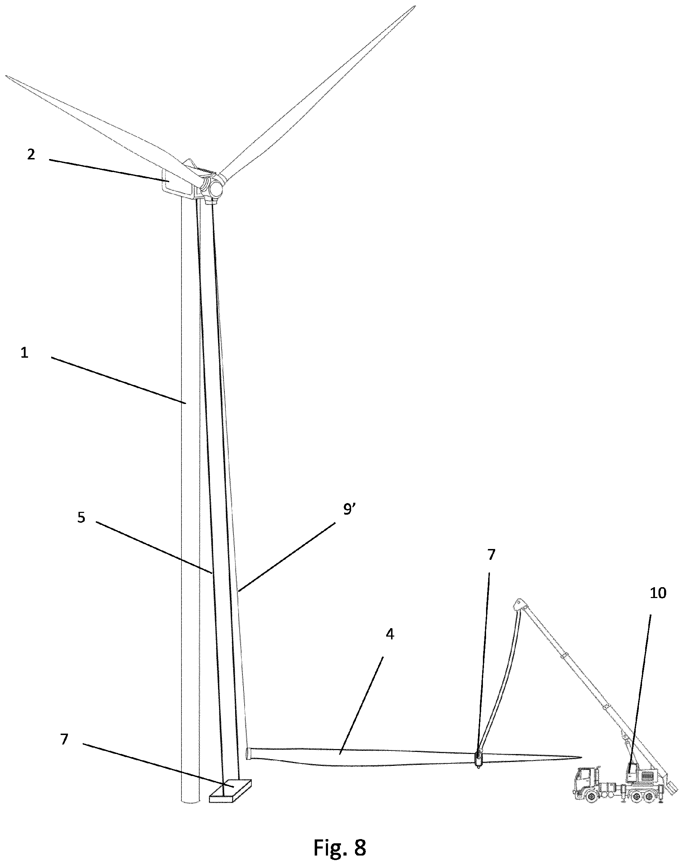

Figure 8 shows how pulling the auxiliary element (10) horizontally lowers the blade (3) until it rests on the ground, while the lowering device (9) continues to release its corresponding cable (9').

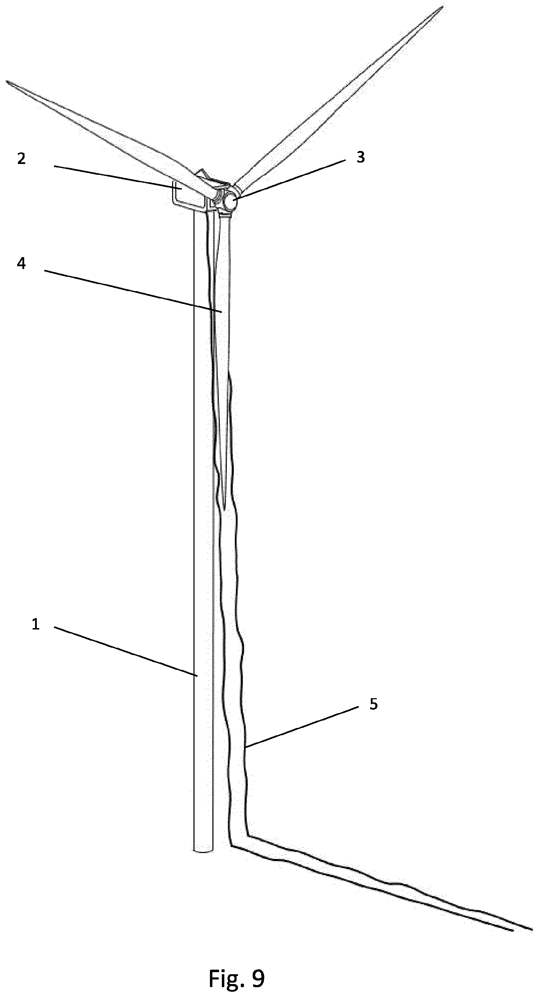

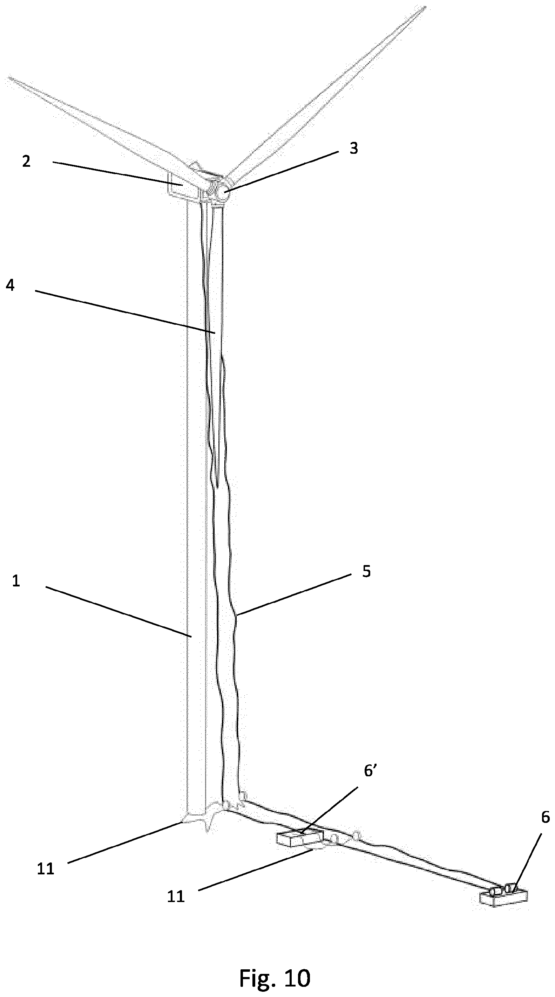

In a second practical embodiment shown in Figure 9, the retainers (5) extend from the lower front part of the nacelle (2) to the base of the tower (1) and beyond. Said retainers (5) are two, preferably steel cables, and are anchored to a final counterweight (6) and to auxiliary anchors. The auxiliary anchors, which may be only one, are two in this practical embodiment: one formed by cables (11) fixed to the base of the tower (1) and another formed by cables (11) fixed to an auxiliary counterweight (6'), shown in Figure 10. The fixed cables (11) and the auxiliary counterweight (6') can be replaced by beams (not shown) anchored to the tower foundation (1).

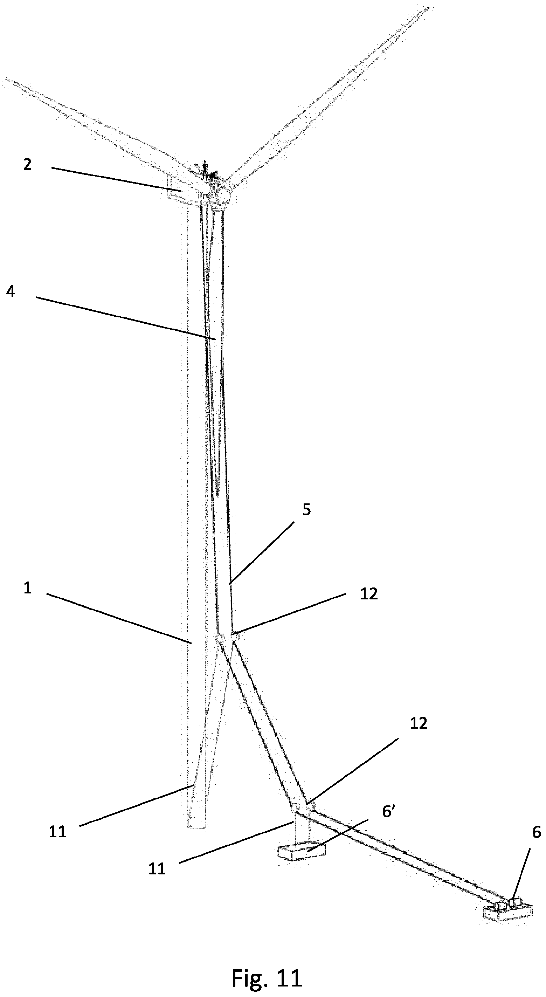

As shown in Figure 11, when the retaining lines (5) are tensioned from the base of the nacelle (2) and/or from the counterweight (6), the pulleys (12) at the end of the auxiliary anchor cables (11) form a rigid track with the retaining lines (5) at a first angle of 30° and a second angle of 60°.

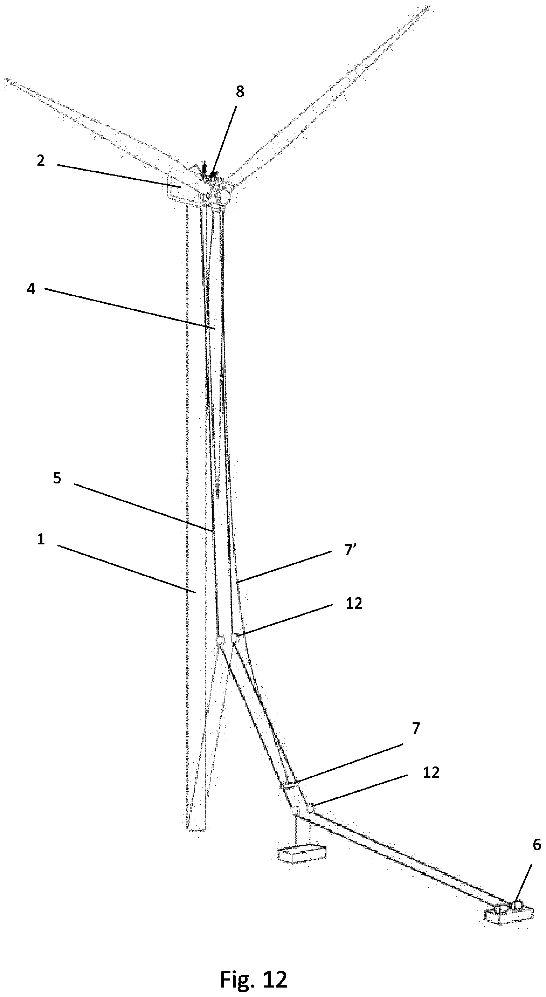

Figure 12 shows how the operators (8) raise the clip (7) from the top of the nacelle (2) by pulling its corresponding cable (7'). The clip (7) has lateral anchors to slide along the retainer (5) and when it reaches the pulleys (12) of the auxiliary anchors, these are bypassed to continue its ascent until it is attached to the lower part of the blade (4). The pulleys (12) are replaceable with shackles that can be opened passively and/or actively, allowing the clip (7) to pass through.

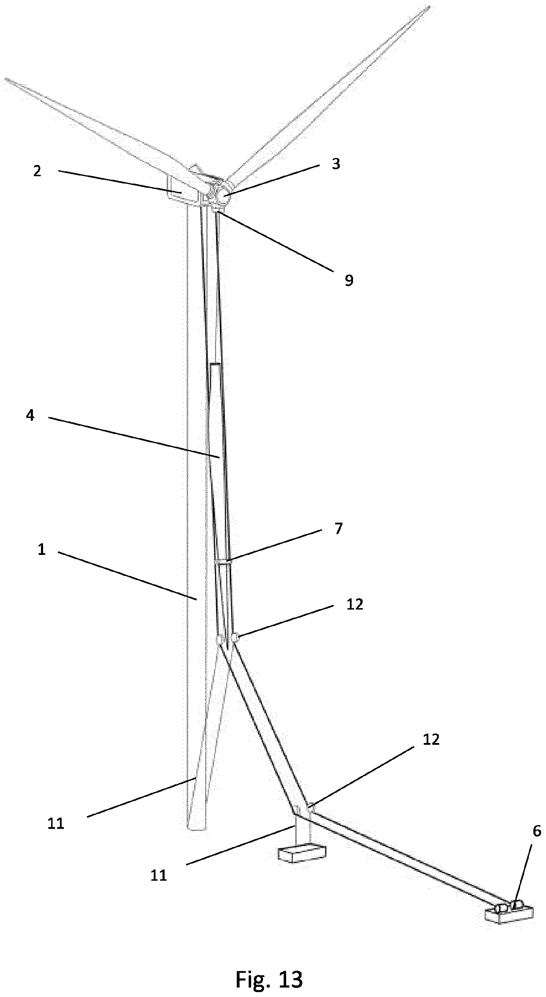

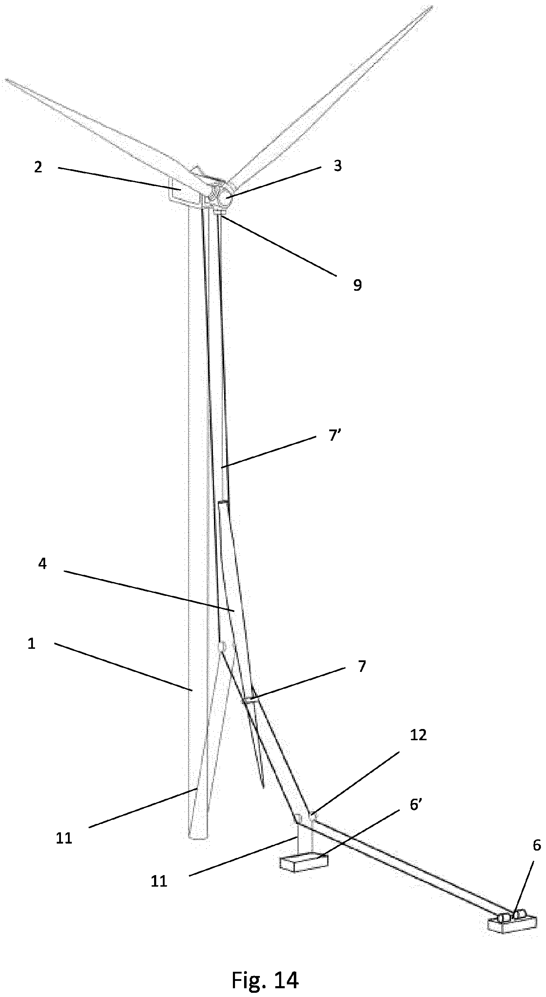

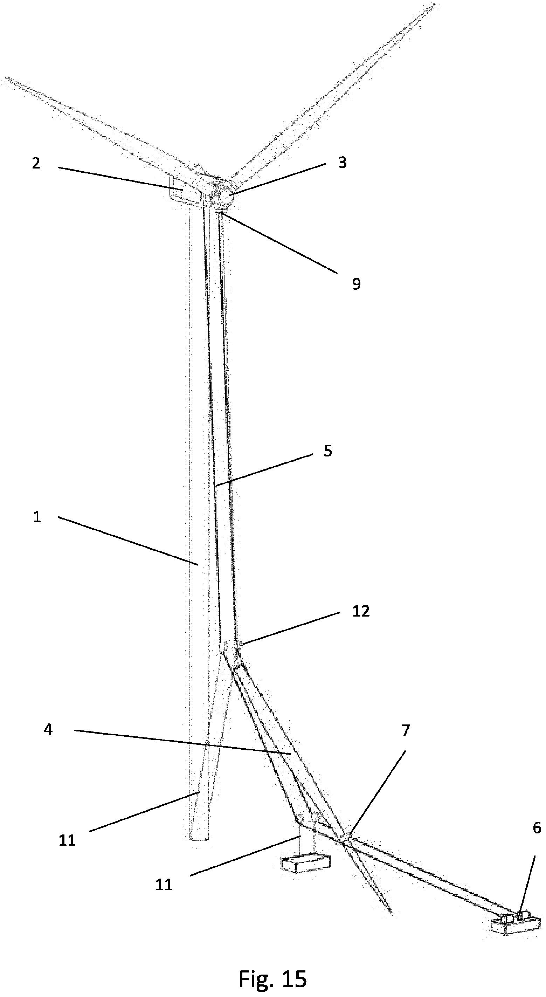

Figure 13 shows the lowering of the blade (4) thanks to the lowering device (9) located inside the rotor (3). Once the clip (7) passes the first auxiliary anchor, the blade (4) begins to tilt, following the rigid path formed by the retainers (5) and shown in Figures 14 and 15.

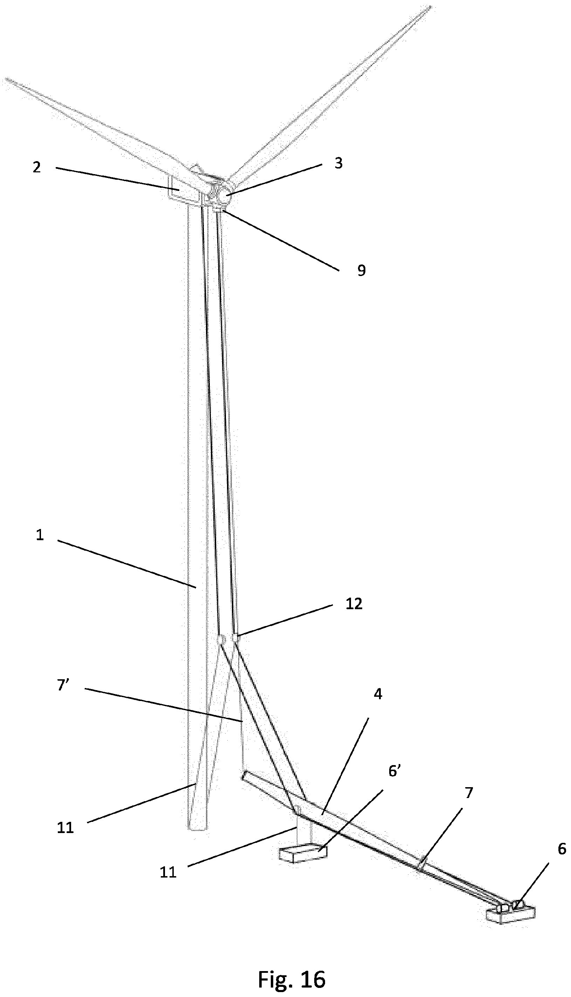

As shown in Figure 16, the blade (4) ends in a horizontal position without the need for auxiliary elements such as cranes or similar. It is held by the cable (7') of the lowering device (9) and the lateral anchors of the clip (7), which slide along the rigid path formed by the retainers (5) without leaving it.

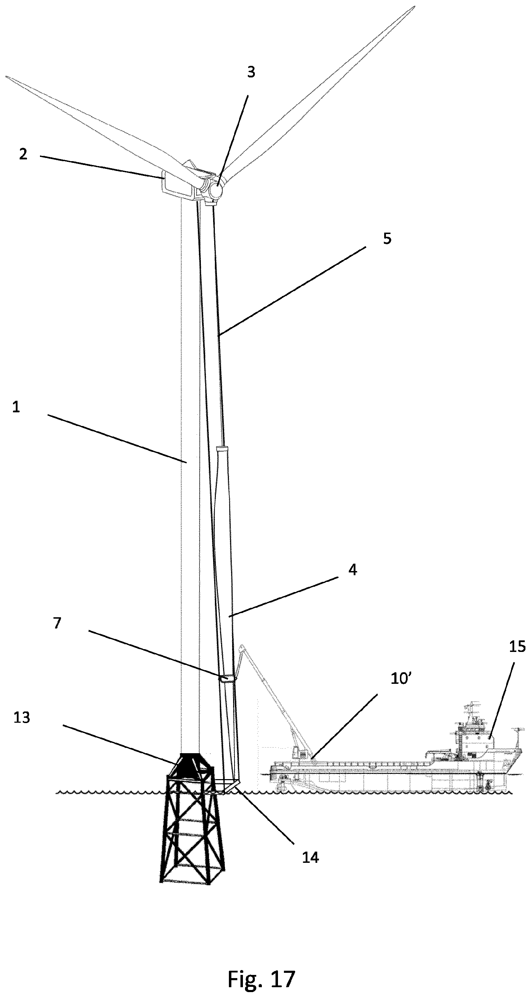

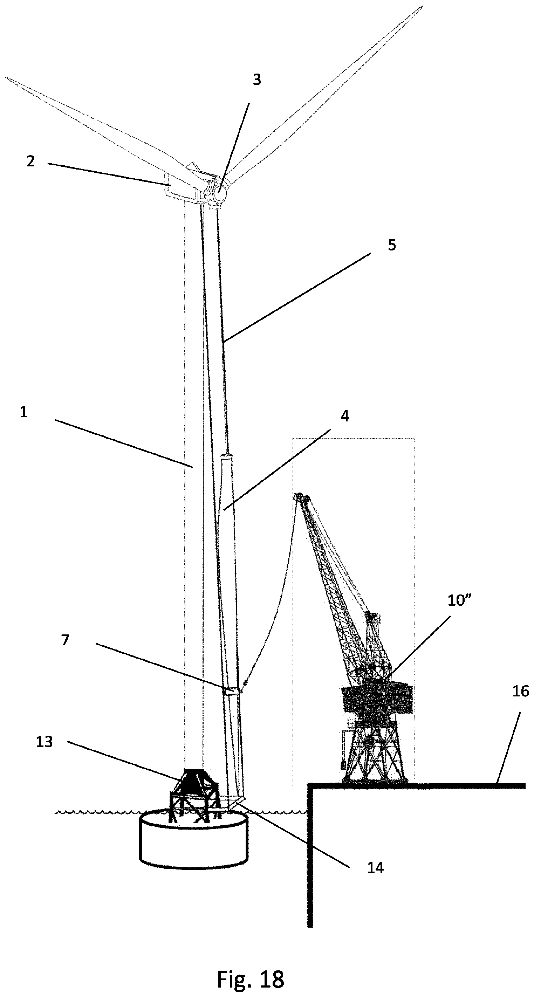

Another possible practical implementation replaces the cables (11) and pulleys (12) with rigid beams (like those shown in figures 17 and 18) that extend from the floor of the tower (1) and contact one or two points of the retained ones (5) forming the catenary or safe path shown in figures 11 to 16. It can also be formed by a set of beams extending from the base of the tower (1) and the second set of beams, further from the base of the tower (1), anchored at a point equivalent to the auxiliary counterweight (6') shown in Figures 10 to 16.

The method followed for using the guiding system is common whether the wind turbine is on land or at sea.

Only the auxiliary elements used to horizontalize the blade differ.

As shown in Figure 17, the wind turbine consists of a tower (1) anchored to its corresponding jacket (13). The blade (4) to be lowered is arranged vertically, parallel to the tower (1). The retaining lines (5) extend from the lower front of the nacelle (2) to the base of the jacket (13), establishing a sufficient distance to form a catenary or safe path that prevents the blade (4) from striking the tower (1) due to the incident wind. The retaining lines (5) are fixed to beams (14) connected to the jacket (13). The tensioners that keep the stays semi-rigid can be placed on the beams (14) or on the nacelle itself (2).

When the clip (7) reaches the bottom of the blade (4) and is secured there, the blade is lowered. When the blade tip (4) reaches the end, the clip (7) is attached to a ship's crane (10'). At that point, the lateral anchors on the clip (7) are released, allowing it to slide along the stays (5) path until the blade is horizontal and rests on the auxiliary vessel (15). This option is valid for floating offshore wind turbines and for those at anchor.

Figure 18 shows the few differences compared to the previously described lowering methods. The auxiliary crane (10") is placed on the dock (16), and the wind turbine has the upper part mounted: tower (1), nacelle (2), rotor (3), and the transition piece or jacket (13). The entire assembly is floating next to the dock (16). The retainers (5) are fixed to beams (14) connected to the lower part of the jacket (13). With the help of the dock crane (10"), the blade (4) is placed horizontally and guided to the dock (16).

## Claims

1. Guiding system for exchanging a wind turbine blade, using an internal lifting and lowering system (9), fixed inside the rotor (3), to lower the blade (4) by means of hoists, cables, and pulley sets, **characterized in that**:
- passive and semi-rigid retaining lines (5) are anchored on one side to the nacelle (2) and on the other to the ground (onshore wind turbine) and to the jacket (offshore wind turbine), forming a catenary or safe path to lower the blade (4) vertically, without hitting it against the tower (1), the ground or the jacket,
- a clip (7) hoistable from the nacelle (2), is fixed to the end of the blade (4), slides between the retaining lines (5) accompanying it during the operation of the lifting and lowering system (9) fixed inside the rotor (3) and guides the tip of the blade (4) leaving the retaining lines (5) during horizontal arrangement and with the help of an auxiliary crane (10, 10', 10") or without leaving the retaining lines (5) during horizontal arrangement if an auxiliary crane is not used,
- the retaining lines (5) form a catenary and operate with the tension provided by a tensioner arranged in the nacelle (2) or in the lower anchor of the ground or the jacket (13), and are independent of the lifting and lowering system (9) fixed inside the rotor (3).

2. Guiding system for exchanging a wind turbine blade according to the preceding claim, **characterized in that** the lower anchor that joins the retaining lines (5) forming the catenary is formed by a counterweight (6) anchored to the ground (onshore wind turbine) and is formed with several beams (14) fixed to the jacket (13) (offshore wind turbine).

3. Guiding system for the exchange a wind turbine blade according to the preceding claim, **characterized in that** at least one of the lower anchors is formed with cables (11) and pulleys (12) to the retainers (5) and to a point on the ground arranged: in the foundation of the tower (1) or in its auxiliary counterweight (6').

4. Guiding system for exchanging a wind turbine blade according to the first claim, **characterized in that** the clip (7) rotates along the catenary and horizontalizes the blade (4) by releasing it from the retainers (5) and using an auxiliary crane (10) for an onshore wind turbine, using a crane on a ship (10') and a crane on a dock (10") for a floating or fixed offshore wind turbine, which is applied in all cases to the tip of the blade (4) which covers the first third thereof.

5. Guiding system for exchanging a wind turbine blade according to the first claim, **characterized in that** the clip (7) rises and is attached to the tip of the blade (4) by means of manual or automatic elements arranged in the nacelle (3).

6. Guiding system for exchanging a wind turbine blade according to claim 1, **characterized in that** the tension applied to the retained lines (5) with the tensioners of the ground, the jacket (13), or the nacelle (2) is gradual depending on the incident wind.

7. Method of use of the guiding system for exchanging a wind turbine blade, **characterized in that**:
- passive and semi-rigid retaining lines (5) are arranged from the nacelle (2), anchored on one side to the lower part of the nacelle (2) and on the other to the ground or to the jacket (13), forming a catenary or safe path for lowering the blade (4) arranged parallel to the tower (1),
- the retaining lines (5) are tensioned with a tensioner arranged in the nacelle (2) or in the lower anchorage of the ground or the final part of the jacket (13),
- a clip (7) is raised from the nacelle (2) and fixed to the end or tip of the blade (4), said clip (7) slides between the retaining lines (5) and by the action of a lifting and lowering system (9) independent of the guiding system and fixed inside the rotor (3), guides the tip of the blade (4) without leaving the retained lines (5),
- and finally and optionally, the clip (7) is attached to an auxiliary crane-type element (10, 10', 10") that pulls the tip of the blade (4), separates the clip (7) from the retained lines (5) and places the blade (4) horizontally.

8. Method of use of the guiding system according to claim 7, **characterized in that** the retaining lines (5) separated from the tower (1) are anchored with a counterweight (6) arranged on the ground and form the catenary or safe path.

9. Method of use of the guiding system according to claim 7, **characterized in that** the retaining lines (5) are separated from the tower (1) and fixed with two auxiliary anchors: one formed by cables (11) fixed at the base of the tower (1) and another formed by cables (11) fixed to an auxiliary counterweight (6'), and with the use of a final counterweight (6) and with pulleys (12) at the end of the cables (11) a catenary is formed that does not require an auxiliary crane to horizontalize the blade (4).

10. Method of use of the guiding system according to claim 7, **characterized in that** the retaining lines (5) are anchored with two pairs of beams attached to the foundation of the tower (1) and form the catenary or safe route.

11. Method of use of the guiding system according to claim 7, **characterized in that** two retainers (5) extend from the lower front part of the nacelle (2) of a floating or offshore wind turbine installed at sea to the beams (14) arranged at the base of the jacket (13), with the actuation of tensioners in the beams (14) or in the nacelle (2) itself the retaining lines (5) are kept in a semi-rigid manner, from the nacelle (2) a clip (7) is raised and when the clip (7) reaches the lower part of the blade (4) it is fixed there, the blade is lowered with the lifting and lowering system (9) independent of the guiding system, when the tip of the blade (4) reaches the end, the clip (7) is fixed to the ship's crane (10') or to the dock crane (10"), the lateral anchors that the clip (7) has are released to slide along the path of the retainers (5), the blade is arranged (4) in a horizontal position and rests on the auxiliary boat (15) or on the dock (16) itself.
